# EUROPÄISCHE PATENTANMELDUNG

(11) **EP 1 328 031 A2**
(43) Veröffentlichungstag der Anmeldung: **16.07.2003**
(21) Anmeldenummer: 03000353.7
(22) Anmeldetag: 10.01.2003
(51) Int. Cl.: H01M 8/02, H01M 8/10, H01M 8/04

(54) **Brennstoffzelle oder Hydrolyseur und Verfahren zur Herstellung einer Brennstoffzelle oder eines Hydrolyseurs**

(30) Priorität: 15.01.2002 DE 10201145
(71) Anmelder: H2-Interpower Brennstoffzellensysteme GmbH, 91126 Schwabach (DE)
(72) Erfinder: Ruthrof, Klaus, 90489 Nürnberg (DE); Grosser, Armin, 91154 Roth (DE); Gunkel, Christian, 91126 Schwabach (DE); Dutschke, Bernhard, 90433 Nürnberg (DE)
(74) Vertreter: Patentanwälte Rehberg + Hüppe

(57) **Zusammenfassung**

Bei einer Brennstoffzelle (1) oder einem Hydrolyseur mit einer zentralen Protonenaustauschmembran (2), mit die zentrale Protonenaustauschmembran (2) abdeckenden Diffusorschichten (3) und mit die Diffusorschichten (3) rückwärtig kontaktierenden Flächenelektroden (4), von denen sich mindestens eine ihrerseits unter Zwischenordnung einer Dichtung (5) an einer rückwärtigen Abdeckungen (7) abstützt, weist die Dichtung (5) einen volumenexpandierten und/oder volumenexpandierbaren Bestandteil auf.

## Beschreibung

Die Erfindung bezieht sich auf eine Brennstoffzelle oder einen Hydrolyseur mit einer zentralen Protonenaustauschmembran, mit die zentrale Protonenaustauschmembran abdeckenden Diffusorschichten und mit die Diffusorschichten rückwärtig abstützenden Flächenelektroden, von denen sich mindestens eine ihrerseits unter Zwischenordnung einer Dichtung an einer rückwärtigen Abdeckung abstützt.

Weiterhin bezieht sich die Erfindung auf ein Verfahren zur Herstellung einer solchen Brennstoffzelle bzw. eines solchen Hydrolyseurs mit einem Schichtaufbau, wobei beim Zusammenbau des Schichtaufbaus die Protonenaustauschmembran, die Diffusorschichten und die Flächenelektroden unter Zwischenordnung mindestens einer Dichtung zwischen rückwärtigen Abdeckungen angeordnet werden.

Während eine Brennstoffzelle durch kalte Oxydation eines Brenngases, in der Regel Wasserstoff, Strom erzeugt, dient ein Hydrolyseur dazu, unter Einsatz von Strom Wasser in Wasserstoff und Sauerstoff aufzuspalten. Es handelt sich also um eine Umkehrung einer Brennstoffzelle. Tatsächlich können eine Brennstoffzelle und ein Hydrolyseur einen identischen Aufbau aufweisen. Soweit im Folgenden nur noch auf eine Brennstoffzelle Bezug genommen ist, bedeutet dies daher immer, dass ein entsprechender Aufbau auch für einen Hydrolyseur angeregt sein soll.

Die vorliegende Erfindung betrifft Brennstoffzellen und Hydrolyseure, die eine unterschiedliche geometrische Form aufweisen können. Es kann sich um einen Aufbau mit einer einzigen ebenen Protonenaustauschmembran handeln, die zwischen ebenfalls ebenen Diffusorschichten und Flächenelektroden sowie Abdeckungen angeordnet ist. Es kann sich aber auch um einen Stapel von mehreren solcher Elementarzellen handeln, um beispielsweise die über eine einzige Protonenaustauschmembran erzielbare Spannung in einer Brennstoffzelle durch eine Reihenschaltung zu vervielfältigen. Man spricht dann von sogenannten Stacks. Eine einzelne Protonenaustauschmembran mit den zugehörigen weiteren Schichten kann aber auch zylindermantelförmig ausgebildet sein, wobei die eine Abdeckung der innen liegenden Flächenelektrode ein Kern oder Rohr ist und die andere Abdeckung der äußeren Flächenelektrode ein Rohr ist. Weiterhin ist es auch möglich, dass die Protonenaustauschmembran mit den anderen Schichten schneckenförmig auf einen Kern aufgewickelt ist, wobei eine äußere Abdeckung mit eingewickelt ist oder durch die jeweils nächste Lage der aufgewickelten Schichtanordnung ausgebildet wird. Zusätzlich kann dann eine äußere Abdeckung des Wickels vorgesehen sein.

Bei allen diesen Aufbauten von Brennstoffzellen und Hydrolyseuren ist darauf zu achten, dass die Flächenelektroden fest an die Diffusorschichten angedrückt werden, weil anderenfalls der Innenwiderstand der Brennstoffzelle bzw. des Hydrolyseurs in nachteiliger Weise anwächst. Bei den Brennstoffzellenstacks ist es hierzu bekannt, eine Mehrzahl durchgängiger massiver Spannschrauben im Randbereich vorzusehen, mit denen die äußersten Abdeckungen mit einer Spannkraft gegeneinander beaufschlagt werden. Nachteil hierbei ist jedoch, dass die von außen auf den Stapel aufgebrachten Spannkräfte sowohl über den gesamten Stapel als auch in der Ebene der einzelnen Lagen des Stapels inhomogen verteilt werden, sobald nur die geringsten Inhomogenitäten in dem Aufbau oder beim Aufbringen der äußeren Spannkräfte vorliegen. Auch bei Aufbauten mit nur einer ebenen Protonenaustauschmembran ist es schwierig, die Spannkräfte auf die äußeren Abdeckungen homogen über die gesamten Flächen der Flächenelektroden zu verteilen, weil die Spannkräfte tatsächlich nur im Randbereich der Protonenaustauschmembran aufgebracht werden können oder sehr massive Abdeckungen oder zusätzliche Abstützungen erforderlich sind.

Bei zylinderförmigen Aufbauten ist es bekannt, zum Aufbringen der notwendigen Anpresskraft auf die Flächenelektroden die innere Flächenelektrode auf einen festen Kern anzuordnen und die äußere Flächenelektrode mit einem unter Spannung stehenden Schnur- oder Bandmaterial zu bewickeln. In diesem Fall ist nachteilig, dass bei Nachgiebigkeit des gesamten Aufbaus die Glattheit der einzelnen Schichten nicht mehr gewährleistet ist. Dasselbe gilt, wenn ein wickelförmiger Aufbau von außen mit einer radial nach innen wirkenden Spannkraft beaufschlagt wird.

Der Erfindung liegt die Aufgabe zugrunde, ein alternatives Konzept zur Aufbringung der notwendigen Anpresskräfte für die Flächenelektroden an die angrenzenden Diffusorschichten bei einer Brennstoffzelle oder einem Hydrolyseur aufzuzeigen, das die oben beschriebenen Nachteile beseitigt.

Bei einer Brennstoffzelle oder einem Hydrolyseur der eingangs beschriebenen Art wird diese Aufgabe erfindungsgemäß dadurch gelöst, dass die Dichtung einen volumenexpandierten und/oder volumenexpandierbaren Bestandteil aufweist.

Bei der Erfindung wir die Anpresskraft für die Flächenelektroden auf die Diffusorschichten nicht von außen über die Abdeckungen, sondern von innen aufgebracht. Hierzu werden Dichtungen verwendet, die sowieso zwischen den Flächenelektroden und ihren rückwärtigen Abdeckungen vorgesehen sind. Konkret werden erfindungsgemäß solche Dichtungen eingesetzt, die einen volumenexpandierbaren Bestandteil aufweisen, der dann zum Aufbringen der Anpresskraft auf die Flächenelektroden nach dem Zusammenbau ganz oder teilweise volumenexpandiert wird. Durch die Volumenexpansion wird zunächst Totvolumen zwischen den Flächenelektroden und den Abdeckungen aufgefüllt und dann die gewünschte Anpresskraft aufgebracht. Es versteht sich, dass hierzu die Abdeckungen starr und vorzugsweise aneinander abgestützt sein müssen, damit sie vor der Volumenexpansion der Dichtungen nicht ausweichen können. Durch das Aufbringen der Anpresskraft über die Volumenexpansion der Dichtungen im Inneren der Brennstoffzelle bzw. des Hydrolyseurs kann eine sehr gleichmäßige Verteilung der Anpresskraft auf die Flächenelektroden erreicht werden, selbst wenn gewisse Inhomogenitäten in dem Schichtaufbau produktionstechnisch nicht zu vermeiden sind. Als zusätzlicher Vorteil wird bei einer erfindungsgemäßen Brennstoffzelle bzw. einem erfindungsgemäßen Hydrolyseur eine dauerhafte Dichtigkeit durch die volumenexpandierten Dichtungen sichergestellt.

Der volumenexpandierte bzw. volumenexpandierbare Bestandteil der neuen Brennstoffzelle bzw. des neuen Hydrolyseurs kann durch chemische und/oder physikalische Einwirkung volumenexpandiert bzw. volumenexpandierbar sein. Dichtungen mit einem durch Temperaturerhöhung volumenexpandierbaren Bestandteil sind unter dem Handelsnamen BaKaSeal von der Firma Bamberger Kaliko GmbH, Bamberg bekannt. Sie weisen einen polymeren Bestandteil auf, der bei Temperaturerhöhung eine bleibende Volumenexpansion erfährt. Als weiterer Bestandteil der bekannten Dichtung ist eine Gewebeverstärkung vorgesehen, die ein Wegfließen der Dichtung aufgrund der Volumenvergrößerung verhindert. Dem Fachmann sind aber auch weitere Substanzen bekannt, die dauerhaft volumenexpandierbar sind. Dieser Volumenexpansion kann eine chemische Umwandlung aber beispielsweise auch eine noch als physikalisch anzusehende Einlagerung von Flüssigkeiten im Sinne einer Quellung des jeweiligen Bestandteils zugrundeliegen.

Um eine möglichst gleichmäßige Anpresskraft auf die Flächenelektroden einzustellen, ist es bevorzugt, wenn die jeweilige Dichtung mehr als 50 %, vorzugsweise mehr als 80 % der Fläche der zugehörigen Flächenelektrode abdeckt.

Die Dichtung der neuen Brennstoffzelle bzw. des neuen Hydrolyseurs kann auch mehrlagig sein, um bei ausreichender Formstabilität eine größere Volumenexpansion zu ermöglichen. Dabei kann die Dichtung auch dazu ausgenutzt werden, Gasund/oder Flüssigkeitsführungskanäle in dem Bereich/zwischen der Flächenelektrode und der jeweiligen Abdeckung auszubilden. Dies kann zugunsten eines einfacheren glattflächigen Aufbaus der Abdeckung erfolgen, in denen im Stand der Technik häufig Gasführungskanäle für das Brenngas oder den Sauerstoff und/oder Kühlwasserführungskanäle ausgebildet sind.

Die Abdeckungen bei der neuen Brennstoffzelle bzw. dem neuen Hydrolyseur können, wie bereits eingangs erwähnt, plattenförmig, zylindermantelförmig oder schneckenmantelförmig sein. Der Vorteil der inneren Aufbringung der Anpresskraft auf die Flächenelektroden wird in jedem Fall ausgenutzt.

Bei einem erfindungsgemäßen Verfahren der eingangs beschriebenen Art wird die mindestens eine Dichtung mit einem volumenexpandierbaren aber zumindest noch nicht vollständig volumenexpandierten Bestandteil zwischen einer Flächenelektrode und ihrer Abdeckung angeordnet, und nach dem Zusammenbau des Schichtaufbaus der Brennstoffzelle bzw. des Hydrolyseurs wird der volumenexpandierbare Bestandteil zumindest teilweise volumenexpandiert.

Wesentlich ist, dass zum Aufbringen der Anpresskräfte auf die Flächenelektroden eine Volumenexpansion der Dichtungen im zusammengebauten Zustand der Brennstoffzelle bzw. des Hydrolyseurs erfolgt. Diese Volumenexpansion muss die Expandierbarkeit des volumenexpandierbaren Bestandteils der Dichtungen nicht voll ausschöpfen. Es kann durchaus ein Rest der Volumenexpandierbarkeit für eine spätere Auffrischung der Anpresskräfte oder auch der Abdichtung der Brennstoffzelle bzw. des Hydrolyseurs zurückgehalten werden.

Wenn bei dem neuen Verfahren unter Verwendung von Dichtungen mit einem volumenexpandierbaren, aber zumindest noch nicht vollständig volumenexpandierten Bestandteil Gas- und/oder Flüssigkeitsführungskanäle zwischen einer Flächenelektrode und deren Abdeckung ausgebildet werden, so ist darauf zu achten, dass die Gas- bzw. Flüssigkeitsführungskanäle zunächst einen größeren freien Querschnitt aufweisen, als er tatsächlich benötigt wird, da die volumenexpandierbaren Dichtungen bei der Volumenexpansion den anfänglichen freien Querschnitt teilweise auffüllen werden.

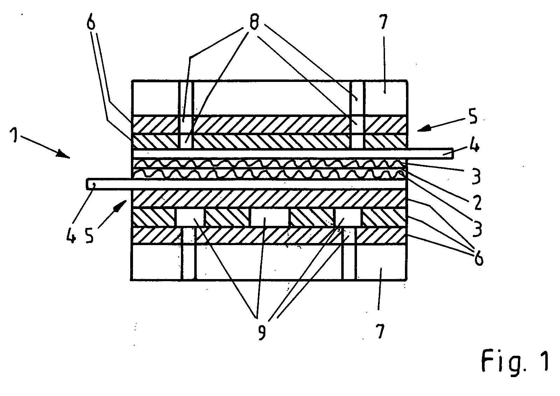

Die Erfindung wird im folgenden anhand von Ausführungsbeispielen näher erläutert und beschrieben. Dabei zeigt
- Fig. 1: einen Querschnitt durch eine Brennstoffzelle, bei der auf beiden Seiten der Protonenaustauschmembran unterschiedliche Möglichkeiten der Ausbildung von Gas- und Flüssigkeitsführungskanälen angedeutet sind.

Die in Fig. 1 dargestellte Brennstoffzelle 1 weist eine zentrale Protonenaustauschmembran 2 auf. Auf beiden Seiten der Protonenaustauschmembran ist jeweils eine Diffusorschicht 3 angeordnet. Über jeder Diffusorschicht 3 verläuft eine Flächenelektrode 4, die mit hier nicht dargestellten Durchbrechungen versehen ist, über welche die Diffusorschicht 3 mit Brenngas, insbesondere Wasserstoff, bzw. Sauerstoff versorgt wird. Die Elektroden 4 dienen zum Abführen des in der Brennstoffzelle 1 erzeugten Stroms. Auf der Rückseite der Elektroden 4 sind Dichtungen 5 vorgesehen, die jeweils aus mehreren Schichten 6 bestehen. Die Dichtungen 5 stützen sich an Abdeckungen 7 ab, die in irgendeiner Weise gegenseitig verspannt oder abgestützt sind. Dies kann durch verschiedene Maßnahmen, beispielsweise Spannstangen im Randbereich oder auch eine koaxiale Anordnung von rohrförmigen Abdeckungen 7 oder dergleichen erreicht werden. Die Dichtungen 5 weisen einen volumenexpandierbaren Bestandteil auf, der bei der vollständig betriebsfertigen Brennstoffzelle 1 zumindest teilweise volumenexpandiert ist. Durch die Volumenexpansion nach dem Zusammenbau des Schichtaufbaus der Brennstoffzelle 1, die vor oder auch im Rahmen ihrer Erstinbetriebnahme erfolgen kann, wird einerseits eine vollständige Abdichtung der Brennstoffzelle erreicht. Vor allem aber wird eine Anpresskraft für die Flächenelektroden 4 an die Diffusorschichten 3 realisiert, die für eine Begrenzung des Innenwiderstands der Brennstoffzelle 1 von wesentlicher Bedeutung ist. Die einzelnen Lagen 6 der Dichtungen 5 sind hier jeweils BaKaSeal-Flachdichtungen von der Firma Bamberger Kaliko GmbH, Bamberg. Diese Flachdichtungen erfahren bei Temperaturerhöhung eine bleibende Volumenvergrößerung. Sie setzen sich aus einem Gewebebestandteil zur Formstabilisierung und dem volumenexpandierenden Bestandteil zusammen. Der mehrlagige Aufbau der Dichtungen 5 dient hier nicht nur zum Aufbringen großer Anpresskräfte auf die Flächenelektroden 4 an die Diffusorschichten 3. Vielmehr sind auch Gasführungskanäle 8 und Flüssigkeitsführungskanäle 9 mit Hilfe der Lagen 6 ausgebildet. Die Gasführungskanäle 8 verlaufen in der Lage 6 direkt über der oberen Flächenelektrode 4 senkrecht zur Ebene des Querschnitts gemäß Fig. 1. Dabei sind diese beiden Längskanäle so gegeneinander abgedichtet, dass ein Differenzdruck zwischen ihnen aufgebaut werden kann, um eine Durchströmung der zugeordneten Diffusorschicht 3 mit Brenngas oder Sauerstoff durch die Flächenelektrode 4 hindurch hervorzurufen. In der oberen Lage 6, die an die Abdeckung 7 angrenzt, verlaufen die Gasführungskanäle 8 parallel zur Zeichnungsebene der Fig. 1. Es handelt sich dabei um Anschlussleitungen, die zu den Längskanälen führen. Auf der Rückseite der unteren Flächenelektrode 4 können ebenfalls Gasführungskanäle ausgebildet sein. In Fig. 1 ist hier aber die Ausbildung von Flüssigkeitsführungskanälen 9, konkret von Kühlwasserkanälen, dargestellt. Die Kühlwasserkanäle 9 verlaufen in der mittleren Lage der drei unteren Lagen senkrecht zur Ebene des Querschnitts gemäß Fig. 1. Durch die unterste, d.h. die der Flächenelektrode 4 abgekehrte Lage 6 verlaufen sie parallel zur Zeichnungsebene und setzen sich durch die dortige Abdeckung 7 fort, um Kühlwasseranschlüsse auszubilden.

Bei der neuen Brennstoffzelle ist es nicht zwingend, dass die Dichtungen 5 mit dem volumenexpandierbaren Bestandteil unmittelbar an die Flächenelektroden 4 angrenzen. Vielmehr kann direkt auf den Rückseiten der Flächenelektroden 4 auch noch ein Formkörper angeordnet sein, der seinerseits Gasführungskanäle ausbildet, wobei sich erst dann die Dichtungen 5 und danach die Abdeckungen 7 anschließen. Auch bei dieser Anordnung wird durch die Volumenexpandierbarkeit der Dichtungen 5 innerhalb der Brennstoffzelle 1 der erwünschte Anpressdruck auf die Flächenelektroden 4 ausgeübt. Dies gilt auch dann, wenn nur die Dichtungen 5 auf einer Seite der Protonenaustauschmembran 2 einen volumenexpandierbaren Bestandteil aufweisen, weil die reactio der Abstützkräfte letztlich erst von der gegenüberliegenden Abdeckung 7 aufgebracht wird. So kann beispielsweise bei einem volumenexpandierbaren Bestandteil der Dichtungen 5, der eine Temperaturerhöhung verlangt, die Temperaturerhöhung durch eine Durchströmung der Flüssigkeitsführungskanäle 9 mit Heißwasser oder einer anderen heißen Flüssigkeit hervorgerufen werden.

### BEZUGSZEICHENLISTE

- 1 -: Brennstoffzelle
- 2 -: Protonenaustauschmembran
- 3 -: Diffusorschicht
- 4 -: Flächenelektrode
- 5 -: Dichtung
- 6 -: Lage
- 7 -: Abdeckung
- 8 -: Gasführungskanal
- 9 -: Flüssigkeitsführungskanal

## Patentansprüche

1. Brennstoffzelle oder Hydrolyseur mit einer zentralen Protonenaustauschmembran, mit die zentrale Protonenaustauschmembran abdeckenden Diffusorschichten und mit die Diffusorschichten rückwärtig kontaktierenden Flächenelektroden, von denen sich mindestens eine ihrerseits unter Zwischenordnung einer Dichtung an einer rückwärtigen Abdeckungen abstützt, **dadurch gekennzeichnet, dass** die Dichtung (5) einen volumenexpandierten und/oder volumenexpandierbaren Bestandteil aufweist.

2. Brennstoffzelle oder Hydrolyseur nach Anspruch 1, **dadurch gekennzeichnet, dass** der volumenexpandierte und/oder volumenexpandierbare Bestandteil durch chemische und/oder physikalische Einwirkung volumenexpandiert bzw. volumenexpandierbar ist.

3. Brennstoffzelle oder Hydrolyseur nach Anspruch 1 oder 2, **dadurch gekennzeichnet, dass** der volumenexpandierte und/oder volumenexpandierbare Bestandteil ein polymerer Bestandteil ist.

4. Brennstoffzelle oder Hydrolyseur nach einem der Ansprüche 1 bis 3, **dadurch gekennzeichnet, dass** die Dichtung (5) eine Gewebeverstärkung aufweist.

5. Brennstoffzelle oder Hydrolyseur nach einem der Ansprüche 1 bis 4, **dadurch gekennzeichnet, dass** die Dichtung (5) mehr als 50 %, vorzugsweise mehr als 80 %, der Fläche der Flächenelektrode (4) abdeckt.

6. Brennstoffzelle oder Hydrolyseur nach einem der Ansprüche 1 bis 5, **dadurch gekennzeichnet, dass** die Dichtung (5) mehrlagig ist.

7. Brennstoffzelle oder Hydrolyseur nach einem der Ansprüche 1 bis 6, **dadurch gekennzeichnet, dass** zwischen der Flächenelektrode (4) und der Dichtung (5) und/oder zwischen verschiedenen Lagen (6) der Dichtung (5) und/oder der Dichtung (5) und der Abdeckung (7) Gas- und/oder Flüssigkeitsführungskanäle (8, 9) ausgebildet sind.

8. Brennstoffzelle oder Hydrolyseur nach einem der Ansprüche 1 bis 7, **dadurch gekennzeichnet, dass** die Abdeckung (7) plattenförmig, zylindermantelförmig oder schneckenmantelförmig ist.

9. Verfahren zur Herstellung einer Brennstoffzelle oder eines Hydrolyseurs mit einem Schichtaufbau nach einem der Ansprüche, 1 bis 8, wobei beim Zusammenbau des Schichtaufbaus die Protonenaustauschmembran, die Diffusorschichten und die Flächenelektroden unter Zwischenordnung mindestens einer Dichtung zwischen rückwärtigen Abdeckungen angeordnet werden, **dadurch gekennzeichnet, dass** die mindestens eine Dichtung (5) mit einem volumenexpandierbaren, aber zumindest noch nicht vollständig volumenexpandierten Bestandteil zwischen einer Flächenelektrode (4) und deren Abdeckungen (7) angeordnet wird und dass nach dem Zusammenbau des Schichtaufbaus der Brennstoffzelle (1) bzw. des Hydrolyseurs der volumenexpandierbare Bestandteil zumindest teilweise volumenexpandiert wird.

10. Verfahren nach Anspruch 9, **dadurch gekennzeichnet, dass** unter Verwendung von Dichtungen (5) mit einem volumenexpandierbaren, aber zumindest noch nicht vollständig volumenexpandierten Bestandteil Gas- und/oder Flüssigkeitsführungskanäle (8, 9) zwischen einer Flächenelektrode (4) und deren Abdeckungen (7) ausgebildet werden.
